# EUROPÄISCHE PATENTSCHRIFT

(11) **EP 3 429 898 B1**
(45) Veröffentlichungstag und Bekanntmachung des Hinweises auf die Patenterteilung: **16.10.2019**
(21) Anmeldenummer: 17700595.6
(22) Anmeldetag: 18.01.2017
(51) Int. Cl.: B60T 15/04

(54) **PARK-LÖSE-VENTIL FÜR EIN ANHÄNGEFAHRZEUG**
PARK RELEASE VALVE FOR A TRAILER VEHICLE
SOUPAPE DE RELÂCHEMENT DE FREIN DE STATIONNEMENT POUR UN VÉHICULE TRACTÉ

(30) Priorität: 16.03.2016 DE 102016003194
(43) Veröffentlichungstag der Anmeldung: 23.01.2019
(73) Patentinhaber: WABCO Europe BVBA, 1170 Brussels (BE)
(72) Erfinder: SIEKER, Armin, 33611 Bielefeld (DE); STENDER, Axel, 31787 Hameln (DE)
(74) Vertreter: Koschnitzki, Thomas
(86) Internationale Anmeldenummer: PCT/EP2017/000052
(87) Internationale Veröffentlichungsnummer: WO 2017/157500

(56) Entgegenhaltungen:
- EP-A1- 1 386 810
- DE-A1-102007 002 020
- US-A- 4 175 588

## Beschreibung

Die Erfindung betrifft ein Park-Löse-Ventil für ein Anhängefahrzeug mit pneumatischer Bremsanlage und zur Steuerung des Drucks in Federspeicherbremszylindern. Außerdem betrifft die Erfindung eine Ventilanordnung, eine pneumatische Bremsanlage und ein Anhängefahrzeug.

Die pneumatische Bremsanlage eines Anhängefahrzeugs wird typischerweise über zwei pneumatische Leitungen mit einem Zugfahrzeug verbunden. Eine Leitung führt Steuerdruck über einen Steueranschluss zum Anhängefahrzeug. Dieser Anschluss wird auch als "Bremse" bezeichnet. Die andere Leitung führt Vorratsdruck über einen als "Vorrat" bezeichneten Versorgungsanschluss zum Anhängefahrzeug.

Integriert ist eine Sicherheitsfunktion bei Abriss der Leitung für den Vorratsdruck. Hierzu wird der Druck in der Leitung überwacht. Bei zu großem Druckabfall wird das Anhängefahrzeug automatisch durch Federspeicherbremsen eingebremst.

Das Anhängefahrzeug weist einen Vorratsbehälter für Druckluft auf, der über den Versorgungsanschluss gespeist wird. Dadurch kann das Anhängefahrzeug über seine Betriebsbremsen mehrfach kurz hintereinander gebremst werden, ohne dass die hierfür erforderliche Druckluft zeitgleich über den Versorgungsanschluss zugeführt werden muss.

Moderne pneumatische Bremsanlagen weisen kombinierte Bremszylinder auf, nämlich mit Membran-Betriebsbremszylinder und Federspeicher-Bremszylinder in einer gemeinsamen Baugruppe. Dies hat den Vorteil, dass Bremskolben, Bremshebel und Bremsscheiben oder Bremstrommeln nur einmal je Baugruppe vorhanden sein müssen. Lediglich Federspeicher-Bremszylinder und Betriebsbremszylinder sind nebeneinander je Baugruppe vorhanden. Derartige kombinierte Bremszylinder werden auch als Tristop-Zylinder bezeichnet. Möglich ist aber auch eine getrennte Anordnung von Betriebsbremsen und Federspeicherbremsen.

In einem abgestellten und vom Zugfahrzeug getrennten Anhängefahrzeug sind die Federspeicherbremsen aktiviert, da die Federspeicher-Bremszylinder entlüftet sind. Zum Rangieren des Anhängefahrzeugs ist ein Lösen der Federspeicherbremsen erforderlich. Hierfür ist ein spezielles Park-Löse-Ventil vorgesehen, welches in einer Lösestellung die Federspeicher-Bremszylinder mit Druckluft aus dem Vorratsbehälter (des Anhängefahrzeugs) belüftet und so löst.

Nach Beendigung des Rangierens müssen die Federspeicher-Bremszylinder wieder entlüftet werden. Hierzu kann das Park-Löse-Ventil eine Parkstellung einnehmen.

In der Praxis kann das Park-Löse-Ventil aus zwei getrennt voneinander bedienbaren Ventileinheiten bestehen. Kompakter ist ein Ventil, in dem die beschriebenen Funktionalitäten soweit wie möglich zusammengefasst sind.

In der EP 1 386 810 B1 ist ein Kombiventil mit federnd aufgehängtem Doppelventilkörper bekannt. Eine Steuerstange ist zwischen drei Stellungen, Fahren-Parken-Rangieren, axial verschiebbar und durch eine Schiebehülse verriegelbar. Der Aufbau ist kompakt aber sehr komplex.

Die Federspeicher-Bremszylinder werden je nach Betriebsfall aus dem Vorratsdruck (über den Versorgungsanschluss) oder aus dem Vorratsbehälter des Anhängefahrzeugs gespeist. Eine Trennung der Leitungen für den Vorratsbehälter einerseits und für den Vorratsdruck andererseits ist deshalb sinnvoll.

Aufgabe der vorliegenden Erfindung ist die Schaffung eines (anderen) Park-Löse-Ventils kompakter Bauart und hoher Funktionalität. Insbesondere soll eine Fehlbedienung oder Fehlstellung vermieden werden. Vorzugsweise soll ein ungewollter Druckausgleich zwischen dem Anschluss für Vorratsdruck und dem Anschluss für Vorratsbehälterdruck vermieden werden.

Zur Lösung der Aufgabe weist das erfindungsgemäße Park-Löse-Ventil die Merkmale des Anspruchs 1 auf, vorzugsweise wie folgt:
a) ein erster Steuerkolben, ein zweiter Steuerkolben,
b) ein Anschluss für Vorratsdruck, ein Anschluss für Vorratsbehälterdruck, ein Anschluss für Entlüftung, ein Anschluss als Druckausgang,
c) der erste Steuerkolben ist in Fahrtstellung und Parkstellung bewegbar,
d) der zweite Steuerkolben ist in Fahrtstellung und Lösestellung bewegbar,
e) wenn beide Steuerkolben in Fahrtstellung sind, ist der Anschluss für Vorratsdruck mit dem Druckausgang verbunden,
f) wenn der erste Steuerkolben in Parkstellung ist und der zweite Steuerkolben in Fahrtstellung ist, ist der Druckausgang mit dem Anschluss für Entlüftung verbunden,
g) wenn der erste Steuerkolben in Fahrtstellung ist und der zweite Steuerkolben in Lösestellung ist, ist der Anschluss für den Vorratsbehälterdruck mit dem Druckausgang verbunden.

Durch die beiden jeweils in zwei Stellungen bewegbaren Steuerkolben lässt sich das Ventil logisch als Kombination von zwei Mehrwegeventilen darstellen, insbesondere von zwei 3/2-Wegeventilen. Zugleich ist eine relativ einfache Realisierung möglich. Die beiden Steuerkolben nehmen jeweils nur zwei verschiedene Positionen ein. Vermieden wird eine schwierig realisierbare Ausführung mit drei oder mehr Positionen eines Steuerkolbens. Die Steuerkolben sind vorzugsweise in einem gemeinsamen Ventilgehäuse angeordnet.

Nach einem weiteren Gedanken der Erfindung sind der Anschluss für Vorratsdruck und der Anschluss für Vorratsbehälterdruck über ein Rückschlagventil miteinander verbunden, derart, dass eine Luftströmung vom Anschluss für Vorratsbehälterdruck zum Anschluss für Vorratsdruck gesperrt ist. Vorzugsweise in das Park-Löse-Ventil integriert ist somit ein Schutz gegen das Abströmen von Druckluft aus dem Vorratsbehälter in einen nur Vorratsdruck führenden Bereich des Ventils.

Nach einem weiteren Gedanken der Erfindung ist der Anschluss für Vorratsdruck mit einem Druckraum zur Beaufschlagung des zweiten Steuerkolbens für eine Bewegung des letzteren von der Lösestellung in die Fahrtstellung verbunden. Möglich ist so eine automatische Verstellung des zweiten Steuerkolbens bei Herstellung der pneumatischen Verbindungen zwischen dem Anhängefahrzeug und dem Zugfahrzeug. Der zweite Steuerkolben weist entsprechende Querschnitte und/oder Druckflächen auf, die vom Vorratsdruck beaufschlagt werden.

Nach einem weiteren Gedanken der Erfindung sind die beiden Steuerkolben konzentrisch oder zumindest koaxial angeordnet und bewegbar. Dies ermöglicht eine sehr kompakte Bauweise.

Nach einem weiteren Gedanken der Erfindung ist eine Betätigungseinrichtung für den ersten Steuerkolben mit diesem koaxial verbunden und bewegbar. Alternativ oder zusätzlich ist eine Betätigungseinrichtung für den zweiten Steuerkolben mit diesem koaxial verbunden und bewegbar.

Nach einem weiteren Gedanken der Erfindung ist die Betätigungseinrichtung für den ersten Steuerkolben konzentrisch oder zumindest koaxial zu der Betätigungseinrichtung für den zweiten Steuerkolben angeordnet und bewegbar. Jeder der Steuerkolben weist eine Betätigungseinrichtung auf. Die beiden Betätigungseinrichtungen sind vorzugsweise mit konzentrisch oder koaxial gehaltenen Bedienungsknäufen versehen. So kann an einem Steuerkolben in axialer Richtung eine Stange mit einem Bedienungsknauf am Ende anschließen bzw. mit dem Steuerkolben verbunden sein. Die Betätigungseinrichtung des anderen Steuerkolbens ist vorzugsweise eine Hülse mit einem Kragen als Bedienungsknauf, wobei die zuvor genannte Stange in der Hülse geführt sein kann.

Nach einem weiteren Gedanken der Erfindung ist die Betätigungseinrichtung für den ersten Steuerkolben benachbart zu der Betätigungseinrichtung für den zweiten Steuerkolben angeordnet. Dabei sind Betätigungseinrichtungen und Steuerkolben derart mechanisch miteinander gekoppelt, dass der zweite Steuerkolben nicht aus der Fahrtstellung in Lösestellung wechseln kann, wenn der erste Steuerkolben in Parkstellung steht. Dadurch wird die Möglichkeit einer Fehlbedienung ausgeschlossen, wie dies beispielsweise bei zwei voneinander unabhängigen Betätigungseinrichtungen möglich ist.

Erfindungsgemäß kann die Betätigungseinrichtung für den ersten Steuerkolben einen Mitnehmer aufweisen, der mit einer korrespondierenden Anlagefläche des zweiten Steuerkolbens oder dessen Betätigungseinrichtung zusammen wirkt. Vorzugsweise ist an der Betätigungseinrichtung für den ersten Steuerkolben ein Absatz vorgesehen, der in Parkstellung des ersten Steuerkolbens an der korrespondierenden Anlagefläche des zweiten Steuerkolbens oder dessen Betätigungseinrichtung anliegt und so eine Bewegung des zweiten Steuerkolbens aus der Fahrtstellung in die Lösestellung verhindert. Insbesondere handelt es sich bei dem Absatz um eine Querschnittsverbreiterung einer koaxialen Stange zur Betätigung des ersten Steuerkolbens. An der Querschnittsverbreiterung liegt in axialer Richtung ein entsprechend eng gestalteter Querschnitt einer koaxialen Hülse zur Betätigung des zweiten Steuerkolbens an.

Nach einem weiteren Gedanken der Erfindung ist im Ventilgehäuse eine Hülse vorgesehen, welche eine zentrale Ventilkammer von einer äußeren Ventilkammer trennt, wobei in der zentralen Ventilkammer der erste Steuerkolben bewegbar ist und einen Innenraum von einem inneren Ringraum trennt, und wobei in der äußeren Ventilkammer der zweite Steuerkolben bewegbar ist und einen mittleren Ringraum von einem äußeren Ringraum trennt. Die Hülse ist vorzugsweise im Ventilgehäuse fest eingebaut. In radialer Richtung ergibt sich innerhalb der Hülse die zentrale Ventilkammer und zwischen dem Ventilgehäuse und der Hülse die äußere Ventilkammer. Die beiden Steuerkolben teilen die zentrale Ventilkammer und die äußere Ventilkammer auf in die genannten vier Räume Innenraum, innerer Ringraum, mittlerer Ringraum und äußerer Ringraum. An einem axialen Ende des Gehäuses sind die beiden Betätigungseinrichtungen für die Steuerkolben vorgesehen, am anderen axialen Ende der Anschluss für die Entlüftung und/oder der Anschluss für den Druckausgang.

Gegenstand der Erfindung ist auch eine Ventilanordnung für ein Anhängefahrzeug, mit einem Park-Löse-Ventil, wie zuvor dargestellt, und mit einem Notbremsventil, wobei ein Anschluss als Druckausgang des Park-Löse-Ventils mit einem Steuereingang des Notbremsventils verbunden ist. Der Druckausgang des Park-Löse-Ventils speist in diesem Fall nicht unmittelbar die Federspeicher-Bremszylinder, sondern steuert die Funktion des Notbremsventils. Letzteres lässt bei entsprechender Stellung und anliegendem Druck Druckluft in die Federspeicher-Bremszylinder strömen. Daneben hat das Notbremsventil die Aufgabe, bei übermäßigem Rückgang des Vorratsdrucks (Abrissfunktion) die Federspeicher-Bremszylinder zu entlüften. Vorzugsweise ist das Notbremsventil zusätzlich mit einem Überlastschutz versehen. Dadurch wird sichergestellt, dass die Federspeicher-Bremszylinder belüftet werden, wenn die Betriebsbremse aktiviert wird.

Nach einem weiteren Gedanken der Erfindung weist das Notbremsventil einen Druckausgang, einen Anschluss für Vorratsbehälterdruck und einen Anschluss für Entlüftung auf, wobei je nach Schaltstellung der Druckausgang mit dem Anschluss für Vorratsbehälterdruck oder mit dem Anschluss für Entlüftung verbindbar ist.

Gegenstand der Erfindung ist auch eine pneumatische Bremsanlage mit einer Ventilanordnung oder einem Park-Löse-Ventil, wie voranstehend beschrieben.

Schließlich ist Gegenstand der Erfindung auch ein Anhängefahrzeug mit einer pneumatischen Bremsanlage, wie zuvor genannt.

Weitere Merkmale der Erfindung ergeben sich aus der Beschreibung im Übrigen und aus den Ansprüchen. Vorteilhafte Ausführungsbeispiele der Erfindung werden nachfolgend anhand von Zeichnungen näher erläutert. Es zeigen:
- Fig. 1: eine pneumatische Bremsanlage eines Anhängefahrzeugs mit Park-Löse-Ventil und Notbremsventil,
- Fig. 2: das Park-Löse-Ventil im Schnitt entlang einer axial gerichteten Ebene, in Lösestellung,
- Fig. 3: das Park-Löse-Ventil in Fahrtstellung,
- Fig. 4: das Park-Löse-Ventil in Parkstellung,

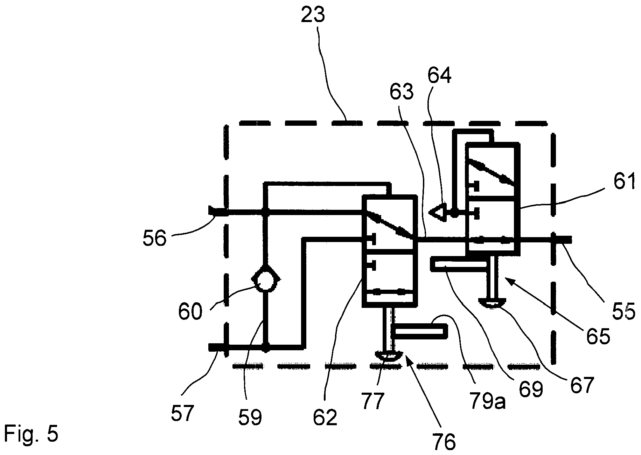

- Fig. 5: einen Ausschnitt aus Fig. 1, nämlich das Park-Löse-Ventil.

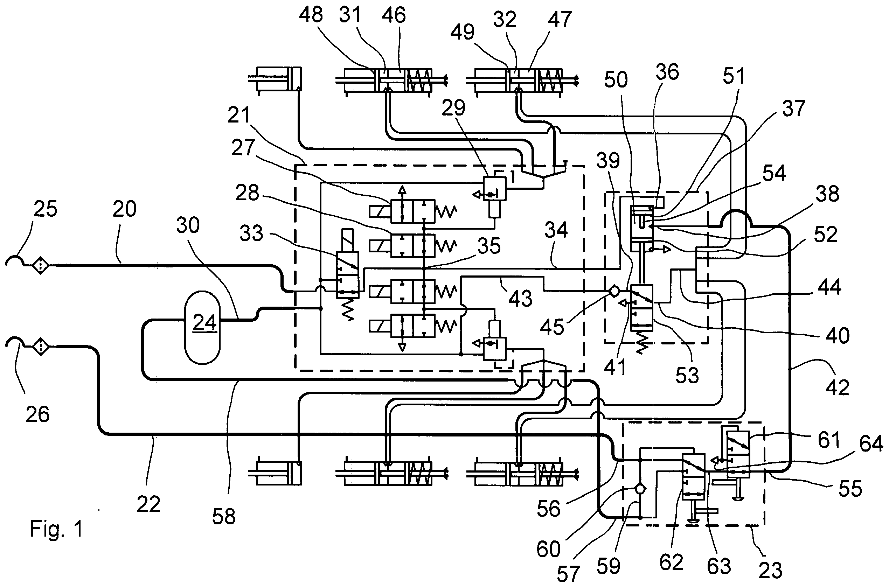

Figur 1 zeigt eine pneumatische Bremsanlage für ein Anhängefahrzeug. Eine Steuerdruckleitung 20 führt zu einem Anhängerbremsmodul 21. Eine Vorratsdruckleitung 22 führt zu einem Park-Löse-Ventil 23 und von diesem weiter über einen Vorratsbehälter 24 zum Anhängerbremsmodul 21. Der Steuerdruckleitung 20 ist ein Steueranschluss 25 zugeordnet, der Vorratsdruckleitung 22 ein Versorgungsanschluss 26.

Das Anhängerbremsmodul 21 ist in bekannter Weise aufgebaut, nämlich je Fahrzeugseite mit zwei Magnetventilen 27, 28 und einem Relaisventil 29. Über die Magnetventile 27, 28 wird die Zufuhr des Steuerdrucks zu den Relaisventilen 29 geregelt. Letztere sind über eine Leitung 30 mit Verzweigungen zugleich an Vorratsbehälterdruck aus dem Vorratsbehälter 24 angeschlossen und geben ausgesteuerten Betriebsbremsdruck an Betriebsbremszylinder 31, 32 ab.

Weiterer Bestandteil des Anhängerbremsmoduls 21 ist ein Redundanzventil 33 als Magnetventil, mit dem die Verbindung zwischen der Steuerdruckleitung 20 und einer Leitung 34 trennbar und umstellbar ist. Auf diese Weise kann die Leitung 34 alternativ mit der Leitung 30 und dem Vorratsbehälterdruck aus dem Vorratsbehälter 24 verbunden werden. Die Leitung 34 verbindet außerdem über einen Abzweig 35 die Magnetventile 28 beider Fahrzeugseiten miteinander.

Weiterhin verbindet die Leitung 34 (bei entsprechend geschaltetem Redundanzventil 33) die Steuerdruckleitung 20 oder die Leitung 30 mit einem ersten Steuereingang 36 einer Ventilanordnung 37. Die Ventilanordnung 37 hat hier insbesondere die Funktion eines Notbremsventils mit Überlastschutz und weist hierzu noch einen zweiten Steuereingang 38, sowie einen ersten Anschluss 39, einen zweiten Anschluss 40 und einen dritten Anschluss 41 auf.

Der zweite Steuereingang 38 ist über eine Leitung 42 und das Park-Löse-Ventil 23 an die Vorratsdruckleitung 22 angeschlossen. Der erste Anschluss 39 ist über eine Leitung 43, ein Rückschlagventil 45 und das Anhängerbremsmodul 21 mit dem Vorratsbehälter 24 verbunden. Der zweite Anschluss 40 ist über eine Leitung 44 und Verzweigungen mit Federspeicher-Bremszylindern 46, 47 beider Fahrzeugseiten verbunden. Der dritte Anschluss 41 ist ein Entlüftungsanschluss.

In der gezeigten Bremsanlage sind die Betriebsbremszylinder 31, 32 Bestandteile sogenannter Kombizylinder, nämlich mit integrierten Federspeicher-Bremszylindern 46, 47, wobei die Kräfte beim Betätigen der Betriebsbremse einerseits und von Federspeichern andererseits auf jeweils dieselben Bremskolben 48, 49 wirken.

In Fahrtstellung gemäß Figur 1 ist die pneumatische Bremsanlage in Bereitschaft. Das heißt, die Federspeicher-Bremszylinder 46, 47 sind durch Vorratsbehälterdruck aus dem Vorratsbehälter 24 belüftet. Hierzu ist der erste Anschluss 39 mit dem zweiten Anschluss 40 über die Ventilanordnung 37 verbunden.

Die Ventilanordnung 37 befindet sich in einer aktiv geschalteten, zweiten Schaltstellung. Ausgelöst ist diese zweite Schaltstellung durch den am zweiten Steuereingang 38 anliegenden Vorratsdruck von mindestens 2,5 bar auf der Vorratsdruckleitung 22. Der Vorratsdruck wird hierzu von der Vorratsdruckleitung 22 durch das Park-Löse-Ventil 23 und durch die Leitung 42 bis zum zweiten Steuereingang 38 geführt. Der dort anliegende Vorratsdruck beaufschlagt einen Zylinderraum 50 zwischen zwei koaxial in Reihe angeordneten Kolben 51, 52, so dass eine Ventileinheit 53 durch Druck des Kolbens 52 die in Figur 1 gezeigte Stellung einnimmt. Dabei liegt am ersten Steuereingang 36 kein Druck an.

Der Kolben 54 ist druckabhängig zwischen den Steuereingängen 36, 38 verschiebbar und in Richtung auf den Kolben 52 mit einem Abstandhalter 54 versehen. Ergänzend sind der Zylinderraum 50 so dimensioniert und die Steuereingänge 36, 38 so positioniert, dass bei Druck an wenigstens einem der Steuereingänge 36, 38 der Kolben 52 beaufschlagt wird (durch Druck oder den Abstandhalter 54) und die Ventileinheit 53 die gezeigte Fahrstellung einnimmt.

Da kein Steuerdruck aus der Steuerdruckleitung 20 anliegt, sind auch die Betriebsbremszylinder 31, 32 unbelüftet.

Das Park-Löse-Ventil 23 weist hier drei Anschlüsse auf, nämlich einen Anschluss 55 für die Leitung 42, einen Anschluss 56 für die Vorratsdruckleitung 22 und einen Anschluss 57 für eine Leitung 58 zum Vorratsbehälter 24 mit Vorratsbehälterdruck. Innerhalb des Park-Löse-Ventils 23 sind die Anschlüsse 56, 57 über einen Abzweig 59 mit Rückschlagventil 60 miteinander verbunden. Letzteres ist so angeordnet, dass der Vorratsbehälterdruck am Anschluss 57 nicht zu einem eventuell niedrigeren Vorratsdruck am Anschluss 56 abströmen kann.

Das Park-Löse-Ventil 23 besteht hier aus zwei Funktionseinheiten, nämlich einem Parkventil 61 und einem Löseventil 62. Die beiden Ventile 61, 62 sind über einen Zweig 63 miteinander gekoppelt und jeweils nach Art von 3/2-Wege-Ventilen vorgesehen. Dabei ist das Parkventil 61 dem Anschluss 55 zugeordnet und das Löseventil 62 den Anschlüssen 56, 57. Das Parkventil 61 ist außerdem mit einer Entlüftung 64 versehen.

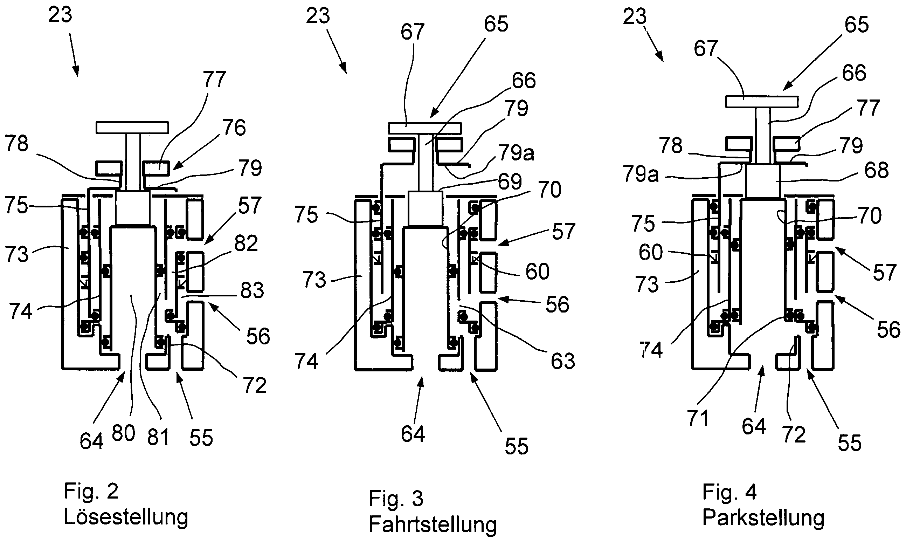

In den Fig. 2 bis 4 ist das Park-Löse-Ventil 23 allein gezeigt, wobei die Funktionen des Parkventils 61 und des Löseventils 62 in einem Ventil mit zwei Kolben realisiert sind:
Das Park-Löse-Ventil 23 ist mit einer ersten Betätigungseinrichtung 65 versehen, die in den Figuren "oben" angeordnet ist und die eine koaxiale Stange 66, einen Bedienungsknauf 67 und eine Stangenverbreiterung 68 zur Bildung eines Mitnehmers 69 in Form eines Absatzes aufweist. Die Stangenverbreiterung 68 ist in axialer Richtung mit einem ersten Steuerkolben 70 verbunden. In der in Fig. 4 gezeigten "oberen" Stellung des Steuerkolbens 70 sind die Anschlüsse 55 und 64 miteinander verbunden, so dass die Leitung 42 entlüftet ist, entsprechend der Parkstellung. Bei abgesenkter, "unterer" Position des ersten Steuerkolbens 70 ergibt sich die Fahrtstellung gemäß den Fig. 1 und 3. Die Entlüftung 64 ist durch den ersten Steuerkolben 70 abgesperrt, durch Anlage einer umlaufenden Dichtung 71 an einer umlaufenden Dichtfläche 72. Dabei ist die Entlüftung 64 koaxial und radial mittig vorgesehen, während der Anschluss 55 achsparallel und radial nach außen versetzt angeordnet ist.

Das Park-Löse-Ventil 23 ist kompakt aufgebaut mit einem zylindrischen Ventilgehäuse 73, einer darin feststehend angeordneten Hülse 74, dem bereits genannten ersten Steuerkolben 70 und einem zweiten Steuerkolben 75. Letzterer weist einen ringförmigen Querschnitt auf, umfasst den ersten Steuerkolben 70 konzentrisch und ist in den Fig. 2 bis 4 nach "oben" (also der Entlüftung 64 gegenüberliegend) mit einer eigenen, zweiten Betätigungseinrichtung 76 versehen. Bestandteile der zweiten Betätigungseinrichtung 76 sind ein Bedienungsknauf 77, eine die Stange 66 konzentrisch umfassende Hülse 78 und eine Stirnseite 79 als Übergang zwischen der Hülse 78 und dem zweiten Steuerkolben 75. Die Stirnseite 79 bildet innenseitig zugleich eine Anlagefläche 79a für den Mitnehmer 69, so dass die Stangenverbreiterung 68 breiter ist als der Innendurchmesser der Hülse 78.

Die beiden Steuerkolben 70, 75 unterteilen zusammen mit der Hülse 78 den Raum innerhalb des Ventilgehäuses 73 (radial von innen nach außen angeordnet) in einen Innenraum 80, inneren Ringraum 81, mittleren Ringraum 82 und äußeren Ringraum 83, siehe Fig. 2. Innenraum 80 und innerer Ringraum 81 bilden zusammen eine zentrale Ventilkammer, während der mittlere Ringraum 82 mit dem äußeren Ringraum 83 eine äußere Ventilkammer bildet. Dabei erstrecken sich mittlerer Ringraum 82 und äußerer Ringraum 83 in axialer Richtung nicht ganz bis an die umlaufende Wandung 72 heran.

In der Fahrtstellung gemäß Fig. 4 befindet sich der erste Steuerkolben 70, wie bereits oben dargestellt, in seiner "oberen" herausgezogenen Position. Der Mitnehmer 69 liegt an der Anlagefläche 79a an und sichert so, dass auch der zweite Steuerkolben 75 herausgezogen ist, also sich in seiner "oberen" Position befindet. Die Anschlüsse 56, 57 sind durch den ersten Steuerkolben 70 und dessen umlaufende Dichtung 71 gegenüber den Anschlüssen 55 und 64 abgedichtet. Dabei liegt die umlaufende Dichtung 71 an einem unteren Rand der Hülse 74 an. In den Fig. 2 bis 4 sind weitere Dichtungen ebenso wie die Dichtung 71 als schwarze Punkte dargestellt.

In der Fahrtstellung gemäß Fig. 3 befindet sich der erste Steuerkolben 70 in seiner "unteren" abgesenkten Position. Der Übergang vom Anschluss 55 zur Entlüftung 64 ist versperrt. Der zweite Steuerkolben 75 befindet sich in seiner "oberen" herausgezogenen Position. Dadurch ist ein Durchgang vom Anschluss 56 zum Anschluss 55 gegeben. Vorratsdruck gelangt in die Leitung 42, so dass die Federspeicher-Bremszylinder 46, 47 im Normalfall belüftet sind.

Der zweite Steuerkolben 75 ist außenseitig zwischen den Anschlüssen 56, 57 mit einer nur unidirektional wirkenden Dichtung versehen, welche die Funktion des Rückschlagventils 60 abbildet. Somit kann Druck vom Anschluss 56 zum Anschluss 57 abströmen, nicht jedoch umgekehrt.

In der Lösestellung gemäß Fig. 2 befinden sich beide Steuerkolben 70, 75 in ihrer "unteren" Position. Dadurch sind der Anschluss 56 mit dem äußeren Ringraum 83 und die Entlüftung 64 versperrt. Es besteht aber ein Durchgang vom Anschluss 57 zum Anschluss 55. Mittlerer Ringraum 82 und innerer Ringraum 80 sind miteinander und mit den Anschlüssen 55, 57 verbunden. Die Leitung 42 kann aus dem Vorratsbehälter 24 belüftet werden, ebenso die Federspeicher-Bremszylinder 46, 47.

Die Lösestellung gemäß Fig. 2 tritt nur bei vom Zugfahrzeug abgehängtem Anhängefahrzeug auf. Es liegt dann kein Vorratsdruck am Anschluss 56 an. Sobald der Versorgungsanschluss 26 wieder an das Zugfahrzeug angeschlossen ist, liegt wieder Vorratsdruck an und der äußere Ringraum 83 wirkt als Druckraum, so dass der zweite Steuerkolben 75 in die obere Position gemäß Fig. 3 bewegt wird.

Die konzentrische Anordnung der beiden Steuerkolben 70, 75 zusammen mit der Hülse 74 ermöglicht eine äußerst kompakte Anordnung des Park-Löse-Ventils 23. Möglich sind nur die anhand der Figuren 2 bis 4 gezeigten drei Stellungen. Durch die besondere Gestaltung der beiden Betätigungseinrichtungen 65, 76 mit Mitnehmer 69 und Anlagefläche 79a wird eine theoretisch mögliche vierte Schaltstellung verhindert.

## Patentansprüche

1. Park-Löse-Ventil (23) für ein Anhängefahrzeug mit pneumatischer Bremsanlage und zur Steuerung des Drucks in Federspeicher-Bremszylindern (46, 47), und mit folgenden Merkmalen:
a) ein erster Steuerkolben (70), ein zweiter Steuerkolben (75),
b) ein Anschluss (56) für Vorratsdruck, ein Anschluss (57) für Vorratsbehälterdruck, ein Anschluss für Entlüftung (64), ein Anschluss (55) als Druckausgang,
c) der erste Steuerkolben (70) ist in Fahrtstellung und Parkstellung bewegbar,
d) der zweite Steuerkolben (75) ist in Fahrtstellung und Lösestellung bewegbar, **dadurch gekennzeichnet, dass**
e) wenn beide Steuerkolben (70, 75) in Fahrtstellung sind, ist der Anschluss (56) für Vorratsdruck mit dem Anschluss (55) als Druckausgang verbunden,
f) wenn der erste Steuerkolben (70) in Parkstellung ist und der zweite Steuerkolben (75) in Fahrtstellung ist, ist der Anschluss (55) für den Druckausgang mit dem Anschluss für die Entlüftung (64) verbunden,
g) wenn der erste Steuerkolben (70) in Fahrtstellung ist und der zweite Steuerkolben (75) in Lösestellung ist, ist der Anschluss (57) für den Vorratsbehälterdruck mit dem Anschluss (55) als Druckausgang verbunden.

2. Park-Löse-Ventil nach Anspruch 1, **dadurch gekennzeichnet, dass** der Anschluss (56) für Vorratsdruck und der Anschluss (57) für Vorratsbehälterdruck über ein Rückschlagventil (60) miteinander verbunden sind, derart, dass eine Luftströmung zum Anschluss (56) für Vorratsdruck gesperrt ist.

3. Park-Löse-Ventil nach Anspruch 1 oder 2, **dadurch gekennzeichnet, dass** der Anschluss (56) für Vorratsdruck mit einem Druckraum zur Beaufschlagung des zweiten Steuerkolbens (75) für eine Bewegung des letzteren von der Lösestellung in die Fahrtstellung verbunden ist.

4. Park-Löse-Ventil nach Anspruch 1 oder einem der weiteren Ansprüche, **dadurch gekennzeichnet, dass** die beiden Steuerkolben (70, 75) konzentrisch oder zumindest koaxial zueinander angeordnet und bewegbar sind.

5. Park-Löse-Ventil nach Anspruch 1 oder einem der weiteren Ansprüche, **dadurch gekennzeichnet, dass** eine Betätigungseinrichtung (65) für den ersten Steuerkolben (70) konzentrisch oder zumindest koaxial zu einer Betätigungseinrichtung (76) für den zweiten Steuerkolben (75) angeordnet und bewegbar ist.

6. Park-Löse-Ventil nach Anspruch 1 oder einem der weiteren Ansprüche, **dadurch gekennzeichnet, dass** die Betätigungseinrichtung (65) für den ersten Steuerkolben (70) mit diesem koaxial verbunden und bewegbar ist.

7. Park-Löse-Ventil nach Anspruch 1 oder einem der weiteren Ansprüche, **dadurch gekennzeichnet, dass** die Betätigungseinrichtung (76) für den zweiten Steuerkolben (75) mit diesem koaxial verbunden und bewegbar ist.

8. Park-Löse-Ventil nach Anspruch 1 oder einem der weiteren Ansprüche, **dadurch gekennzeichnet, dass** die Betätigungseinrichtung (65) für den ersten Steuerkolben (70) benachbart zu der Betätigungseinrichtung (76) für den zweiten Steuerkolben (75) angeordnet ist und die Betätigungseinrichtungen (65, 76) und Steuerkolben (70, 75) derart mechanisch miteinander gekoppelt sind, dass der zweite Steuerkolben (75) nicht aus der Fahrtstellung in Lösestellung wechseln kann, wenn der erste Steuerkolben (70) in Parkstellung steht.

9. Park-Löse-Ventil nach Anspruch 8, **dadurch gekennzeichnet, dass** die Betätigungseinrichtung (65) für den ersten Steuerkolben (70) einen Mitnehmer (69) aufweist, der mit einer korrespondierenden Anlagefläche (79a) des zweiten Steuerkolbens (75) oder dessen Betätigungseinrichtung (76) zusammenwirkt.

10. Park-Löse-Ventil nach Anspruch 1 oder einem der weiteren Ansprüche, **dadurch gekennzeichnet, dass** in einem Ventilgehäuse (73) eine Hülse (74) vorgesehen ist, welche eine zentrale Ventilkammer von einer äußeren Ventilkammer trennt, dass in der zentralen Ventilkammer der erste Steuerkolben (70) bewegbar ist und so einen Innenraum (80) von einem inneren Ringraum (81) trennt, und dass in der äußeren Ventilkammer der äußere Steuerkolben (75) bewegbar ist und so einen mittleren Ringraum (82) von einem äußeren Ringraum (83) trennt.

11. Ventilanordnung für ein Anhängefahrzeug, mit einem Park-Löse-Ventil (23) nach einem der voranstehenden Ansprüche, und mit einem Notbremsventil, wobei ein Anschluss (55) als Druckausgang des Park-Löse-Ventils (23) mit einem Steuereingang (38) des Notbremsventils verbunden ist.

12. Ventilanordnung nach Anspruch 11, **dadurch gekennzeichnet, dass** das Notbremsventil einen Anschluss (40) als Druckausgang, einen Anschluss (39) an Vorratsbehälterdruck und einen Anschluss (41) für Entlüftung aufweist, und dass je nach Schaltstellung der Anschluss (40) für den Druckausgang mit dem Anschluss (39) für Vorratsbehälterdruck oder mit dem Anschluss (41) für Entlüftung verbindbar ist.

13. Pneumatische Bremsanlage mit einer Ventilanordnung nach Anspruch 11 oder 12 oder mit einem Park-Löse-Ventil nach einem der Ansprüche 1 bis 10.

14. Anhängefahrzeug mit einer pneumatischen Bremsanlage nach Anspruch 13.

## Claims

1. Park release valve (23) for a trailer vehicle with pneumatic braking system and for controlling the pressure in spring brake cylinders (46, 47), and having the following features:
a) a first control piston (70), a second control piston (75),
b) a supply pressure port (56), a reservoir pressure port (57), a vent port (64), a pressure outlet port (55),
c) the first control piston (70) can be moved into driving position and parking position,
d) the second control piston (75) can be moved into driving position and release position,
**characterized in that**
e) when both control pistons (70, 75) are in the driving position, the supply pressure port (56) is connected to the pressure outlet port (55),
f) when the first control piston (70) is in the parking position and the second control piston (75) is in the driving position, the pressure outlet port (55) is connected to the vent port (64),
g) when the first control piston (70) is in the driving position and the second control piston (75) is in the release position, the reservoir pressure port (57) is connected to the pressure outlet port (55).

2. Park release valve according to Claim 1, **characterized in that** the supply pressure port (56) and the reservoir pressure port (57) are connected to each other via a non-return valve (60) in such a way that an air flow to the supply pressure port (56) is blocked.

3. Park release valve according to Claim 1 or 2, **characterized in that** the supply pressure port (56) is connected to a pressure chamber for acting on the second control piston (75) for a movement of the latter from the release position to the driving position.

4. Park release valve according to Claim 1 or one of the further claims, **characterized in that** the two control pistons (70, 75) are arranged concentrically or at least coaxially relative to each other and are movable.

5. Park release valve according to Claim 1 or one of the further claims, **characterized in that** an actuating device (65) for the first control piston (70) is arranged concentrically or at least coaxially relative to an actuating device (76) for the second control piston (75) and is movable.

6. Park release valve according to Claim 1 or one of the further claims, **characterized in that** the actuating device (65) for the first control piston (70) is connected coaxially to the latter and is movable.

7. Park release valve according to Claim 1 or one of the further claims, **characterized in that** the actuating device (76) for the second control piston (75) is connected coaxially to the latter and is movable.

8. Park release valve according to Claim 1 or one of the further claims, **characterized in that** the actuating device (65) for the first control piston (70) is arranged adjacent to the actuating device (76) for the second control piston (75), and the actuating devices (65, 76) and control pistons (70, 75) are coupled mechanically to each other in such a way that the second control piston (75) cannot change from the driving position to the release position when the first control piston (70) is in the parking position.

9. Park release valve according to Claim 8, **characterized in that** the actuating device (65) for the first control piston (70) has a driver (69), which interacts with a corresponding stop surface (79a) of the second control piston (75) or the actuating device (76) of the latter.

10. Park release valve according to Claim 1 or one of the further claims, **characterized in that** a sleeve (74) which divides a central valve chamber from an outer valve chamber is provided in a valve housing (73), **in that** the first control piston (70) is movable in the central valve chamber and thus separates an internal space (80) from an inner annular space (81), and **in that** the outer control piston (75) is movable in the outer valve chamber and thus separates a central annular space (82) from an outer annular space (83).

11. Valve arrangement for a trailer vehicle, having a park release valve (23) according to one of the preceding claims, and having an emergency brake valve, wherein a pressure outlet port (55) of the park release valve (23) is connected to a control input (38) of the emergency brake valve.

12. Valve arrangement according to Claim 11, **characterized in that** the emergency brake valve has a pressure outlet port (40), a port (39) at reservoir pressure and a vent port (41), and **in that**, depending on the switching position, the pressure outlet port (40) can be connected to the reservoir pressure port (39) or to the vent port (41) .

13. Pneumatic braking system having a valve arrangement according to Claim 11 or 12 or having a park release valve according to one of Claims 1 to 10.

14. Trailer vehicle having a pneumatic braking system according to Claim 13.

## Revendications

1. Soupape de relâchement de frein de stationnement (23) pour un véhicule remorque avec une installation de frein pneumatique et destinée à commander la pression dans les cylindres de frein d'accumulateur à ressort (46, 47), et comprenant les caractéristiques suivantes :
a) un premier piston de commande (70), un deuxième piston de commande (75),
b) un raccord (56) pour la pression de stockage, un raccord (57) pour la pression du réservoir de stockage, un raccord pour le désaérage (64), un raccord (55) en tant que sortie de pression,
c) le premier piston de commande (70) peut être déplacé dans la position de conduite et la position de stationnement,
d) le deuxième piston de commande (75) peut être déplacé dans la position de conduite et la position de relâchement,
**caractérisée en ce que**
e) lorsque les deux pistons de commande (70, 75) sont dans la position de conduite, le raccord (56) pour la pression de stockage est connecté au raccord (55) en tant que sortie de pression,
f) lorsque le premier piston de commande (70) est dans la position de stationnement et que le deuxième piston de commande (75) est dans la position de conduite, le raccord (55) pour la sortie de pression est connecté au raccord pour le désaérage (64),
g) lorsque le premier piston de commande (70) est dans la position de conduite et que le deuxième piston de commande (75) est dans la position de relâchement, le raccord (57) pour la pression de réservoir de stockage est connecté au raccord (55) en tant que sortie de pression.

2. Soupape de relâchement de frein de stationnement selon la revendication 1, **caractérisée en ce que** le raccord (56) pour la pression de stockage et le raccord (57) pour la pression de réservoir de stockage sont connectés l'un à l'autre par le biais d'un clapet antiretour (60) de telle sorte qu'un écoulement d'air vers le raccord (56) pour la pression de stockage soit bloqué.

3. Soupape de relâchement de frein de stationnement selon la revendication 1 ou 2, **caractérisée en ce que** le raccord (56) pour la pression de stockage est connecté à un espace de pression pour solliciter le deuxième piston de commande (75) en vue d'un déplacement de ce dernier de la position de relâchement dans la position de conduite.

4. Soupape de relâchement de frein de stationnement selon la revendication 1 ou selon l'une quelconque des autres revendications, **caractérisée en ce que** les deux pistons de commande (70, 75) sont disposés et peuvent être déplacés concentriquement ou au moins coaxialement l'un par rapport à l'autre.

5. Soupape de relâchement de frein de stationnement selon la revendication 1 ou selon l'une quelconque des autres revendications, **caractérisée en ce qu'**un dispositif d'actionnement (65) pour le premier piston de commande (70) est disposé et peut être déplacé concentriquement ou au moins coaxialement par rapport à un dispositif d'actionnement (76) pour le deuxième piston de commande (75).

6. Soupape de relâchement de frein de stationnement selon la revendication 1 ou selon l'une quelconque des autres revendications, **caractérisée en ce que** le dispositif d'actionnement (65) pour le premier piston de commande (70) est connecté coaxialement à celui-ci et peut être déplacé coaxialement avec celui-ci.

7. Soupape de relâchement de frein de stationnement selon la revendication 1 ou selon l'une quelconque des autres revendications, **caractérisée en ce que** le dispositif d'actionnement (76) pour le deuxième piston de commande (75) est connecté coaxialement à celui-ci et peut être déplacé coaxialement avec celui-ci.

8. Soupape de relâchement de frein de stationnement selon la revendication 1 ou selon l'une quelconque des autres revendications, **caractérisée en ce que** le dispositif d'actionnement (65) pour le premier piston de commande (70) est disposé à côté du dispositif d'actionnement (76) pour le deuxième piston de commande (75) et les dispositifs d'actionnement (65, 76) et les pistons de commande (70, 75) sont accouplés les uns aux autres mécaniquement de telle sorte que le deuxième piston de commande (75) ne puisse pas passer de la position de conduite à la position de relâchement lorsque le premier piston de commande (70) est dans la position de stationnement.

9. Soupape de relâchement de frein de stationnement selon la revendication 8, **caractérisée en ce que** le dispositif d'actionnement (65) pour le premier piston de commande (70) présente un dispositif d'entraînement (69) qui coopère avec une surface de butée correspondante (79a) du deuxième piston de commande (75) ou de son dispositif d'actionnement (76).

10. Soupape de relâchement de frein de stationnement selon la revendication 1 ou selon l'une quelconque des autres revendications, **caractérisée en ce que** dans un boîtier de soupape (73) est prévue une douille (74) qui sépare une chambre de soupape centrale d'une chambre de soupape extérieure, **en ce que** dans la chambre de soupape centrale le premier piston de commande (70) peut être déplacé et sépare ainsi un espace interne (80) d'un espace annulaire interne (81), et **en ce que** dans la chambre de soupape extérieure le piston de commande extérieur (75) peut être déplacé et sépare ainsi un espace annulaire central (82) d'un espace annulaire extérieur (83).

11. Agencement de soupape pour un véhicule remorque comprenant une soupape de relâchement de frein de stationnement (23) selon l'une quelconque des revendications précédentes et une soupape de freinage d'urgence, un raccord (55) en tant que sortie de pression de la soupape de relâchement de frein de stationnement (23) étant connecté à une entrée de commande (38) de la soupape de freinage d'urgence.

12. Agencement de soupape selon la revendication 11, **caractérisé en ce que** la soupape de freinage d'urgence présente un raccord (40) en tant que sortie de pression, un raccord (39) de pression de stockage de réservoir de stockage et un raccord (41) pour le désaérage, et **en ce qu'**en fonction de chaque position de commutation, le raccord (40) pour la sortie de pression peut être connecté au raccord (39) pour la pression de réservoir de stockage ou au raccord (41) pour le désaérage.

13. Installation de freinage pneumatique comprenant un agencement de soupape selon la revendication 11 ou 12, ou comprenant une soupape de relâchement de frein de stationnement selon l'une quelconque des revendications 1 à 10.

14. Véhicule remorque comprenant une installation de freinage pneumatique selon la revendication 13.
